# EUROPEAN PATENT SPECIFICATION

(11) **EP 1 381 282 B1**
(45) Date of publication and mention of the grant of the patent: **22.11.2006**
(21) Application number: 02740524.0
(22) Date of filing: 26.04.2002
(51) Int. Cl.: A23D 7/00, A23L 1/48, A23L 2/38, A23L 1/0522, A23L 1/054, A23L 1/0534, A23L 1/30

(54) **COMPOSITION CONTAINING PLANT SEED OIL**
PFLANZENSAMENÖL ENTHALTENDE ZUSAMMENSETZUNG
COMPOSITION CONTENANT DE L'HUILE VEGETALE

(30) Priority: 27.04.2001 GB 0110408
(43) Date of publication of application: 21.01.2004
(73) Proprietor: SMITHKLINE BEECHAM PLC, Brentford, Middlesex TW8 9GS (GB)
(72) Inventor: BRITTON, Sarah c/o GlaxoSmithKline, Brentford, Middlesex TW8 9GS (GB); DAGGY, Bruce, Parsippany, New Jersey 07054 (US); MARSHALL, Sarah, c/o GlaxoSmithKline, Brentford, Middlesex TW8 9GS (GB)
(74) Representative: Morris, Miriam Elizabeth
(86) International application number: PCT/EP2002/004626
(87) International publication number: WO 2002/087349

(56) References cited:
- EP-A- 0 266 323
- US-A- 4 526 793
- US-A- 5 234 952
- US-A- 5 989 572

## Description

The present invention relates to compositions comprising a plant seed oil having improved sensory characteristics such as improved mouthfeel, taste and odour.

The use of edible oils in nutritional and pharmaceutical compositions is well known. For example marine oils and marine oil concentrates containing omega-3 fatty acids have been recommended for use in the prevention of coronary heart disease, migraine headaches, arthritis and some allergies. Plant seed oil isolated from the *Ribes* fruit genus, *e.g*. blackcurrants (*Ribes* nigrum), redcurrants (*Ribes* rubrum), gooseberries (*Ribes ovacrispa* or *grossularia*); and other plant seed oils such as evening primrose oil and borage oil (starflower oil) are also a source of omega-3 fatty acids, in particular α-linolenic acid, and γ-linolenic acid. For example blackcurrant seed oil typically contains 15% α-linolenic acid 15-20% γ-linolenic acid.

There have been several human studies exploring the health benefits of blackcurrant seed oil. In one human study (Deferne J.L. and Leeds A.R., *"Resting blood pressure and cardiovascular reactivity to mental arithmetic in mild hypertensive males supplemented with blackcurrant seed oil",* (1996), *Journal of Human Hypertension* 10: 531-537), a reduction in resting blood pressure was demonstrated in mild hypertensive males whose diet was supplemented for 8 weeks with 6g/day blackcurrant seed oil. Plasma γ-linolenic acid was significantly increased after 8 weeks supplementation. Cholesterol lowering and inhibition of platelet aggregation was also demonstrated in this study. In a further human study (Leventral L.J.; Boyce E.G.; Zurier R.B., (1994), *"Treatment of rheumatoid arthritis with blackcurrant seed oil ", Br. J. Rheumato.l* 33: 847-852), rheumatoid arthritis patients were given blackcurrant seed oil (10.5 g/day) for 24 weeks. At the end of the study the patients reported a significant reduction in overall pain and in joint tenderness, compared with the placebo treatment. In a further human study (Wu D.Y., Meydani M., Leka L. et al., (1999), *"Effect of dietary supplementation with black currant seed oil on the immune response of healthy adult subjects", Am. J. Clin. Nutr.* 70: 536-543), the diet of healthy elderly patients was supplemented with blackcurrant seed oil (750mg/day) for 2 months. At the end of the study, the treatment group had significantly higher levels of plasma γ-linolenic acid, α-linolenic acid, stearidonic acid and dihomo-y-linolenic acid. Blackcurrant seed oil supplementation significantly enhanced delayed-type hypersensitivity skin response, a parameter used to assess immune capacity. It was also found that the supplementation reduced the production of prostaglandin E2, a marker of antiinflammatory activity.

Whilst the potential health benefits associated with plant seed oils are known, such oils are equally well-known for their objectionable taste and poor organoleptic properties. Encapsulation of unpalatable oils, such as blackcurrant seed oil, has been used a means of overcoming the organoleptic problem. However encapsulation may only be used when no more than a moderately high unit dose, e.g. 500mgs to 1000mgs, is required, and even then, this results in the need for either large sized capsules, that are difficult to swallow, and/or the need for a large number of capsules to be taken on a daily basis. In the recent Leventral study,cited above, participants described the daily dose of fifteen large oil capsules as undesirable.

EP296116 (Warner-Lambert) discloses that it is desirable to deliver large doses of unpleasant edible oils without the unpleasant odour and taste problems associated with such oils. This prior art aims to address these problems by the provision of a palatable suspension of an unpleasant edible oil containing up to 80 % of the oil, an inorganic complexing agent, a sweetening agent and a taste and/or odour masking agent. The inorganic complexing agent is disclosed as being selected from a list of compounds including magnesium trisilicate, calcium carbonate ground oyster shells and mixtures thereof. Taste masking agents disclosed include anethole, eugenol and vanillin whilst the odour masking agent includes lime, orange, cinnamon and wintergreen.

US 4 526 793 discloses means of preparing compositions comprising plant seed oils and palatability improvers, although the problem of taste masking is not addressed.

It is an object of the present invention to provide compositions containing an unpalatable plant seed oil, the compositions having improved sensory characteristics. Specifically the invention concerns unpalatable plant seed oils containing omega-3 fatty acids. Suitably the plant seed oil may be isolated from the plant by methods well known in the art. Plant seed oils of the invention are from the *Ribes* genus of fruit, e.g. blackcurrants (*Ribes* nigrum), redcurrants (*Ribes* rubrum), gooseberries (*Ribes ovacrispa* or *grossularia*); and from evening primrose and borage plants respectively. This object is achieved according to the present invention which is based on the unexpected finding that a hydrocolloid base incorporating starch and a thickening agent provides improved sensory characteristics in compositions containing a *Ribes* genus fruit oil, evening primrose oil and borage plant oil. These include improved organoleptic properties such as taste, smell and mouthfeel and a reduction in the mouthcoating cloying sensation experienced with conventional oil-containing compositions. Unpleasant lingering flavours, associated with conventional oil-containing products, are reduced in compositions of the invention. Surprisingly the hydrocolloid base has been found to contain flavour masking properties so that the characteristic "oily" taste of the compositions is reduced. The hydrocolloid base serves as a sensory masking component in compositions of the invention. Advantageously compositions of the invention do not require encapsulation as a means of avoiding unpleasant sensory characteristics. However the compositions may be encapsulated, if desired.

According to one aspect of the present invention there is provided a palatable composition comprising an oil phase, an aqueous phase, a hydrocolloid base and a sweetening agent; wherein the said oil phase contains a plant seed oil from a *Ribes* fruit, evening primrose or borage plant and the hydrocolloid base consists of starch and at least one thickening agent.

Compositions of the invention are in the form of a liquid and suitably are oil-in-water emulsions i.e. colloidal solutions comprising a continuous phase that is water-based and a disperse phase that is oil-based. Alternatively water-in-oil emulsions in which the continuous phase comprises an oil and the disperse phase comprises water are also within the scope of the present invention. Oil-in-water emulsions are preferred.

The compositions comprise an oil phase containing an amount of plant seed oil ranging from about 0.1 % to about 99 % w/w, preferably from about 0.1 % to about 30% w/w and more preferably from about 1 to 20% w/w, such as from about 5 % to about 25 % w/w, even more preferably from about 1 % to about 15 % w/w . Advantageously, if a relatively high dose of oil is required e.g. more than 1g/day, compositions of the invention may be formulated so as to provide single or twice daily dosing. For example a daily dose of 2g may be provided by two 10ml spoonfulls of a composition, suitably in the form of an emulsion, containing a plant seed oil in an amount of 10% w/w by the composition.

Compositions of the invention comprise an aqueous phase containing water in an amount ranging from about 0.1 % to about 99 % w/w, preferably from about 70 % to about 99 % w/w, even more preferably from about 75 % to about 95 % w/w. In addition to forming an essential component of the emulsion, the water serves as a solvent for any water-soluble additives of the compositions.

By "hydrocolloid base" is meant a combination of starch and at least one thickening agent. It is to be understood that by "combination" is meant "at least two components" of the hydrocolloid base. Each component, i.e the starch and a thickening agent, may be added separately or in a mixture to the oil phase or to the aqueous phase.

Starch obtainable from a variety of sources may be used, e.g. corn/maize, high amylose maize, waxy maize, potato, rice and wheat and the starch may be in a pregelatinized or non-pregelatinized form. Starch available form corn/maize is preferred. Particularly preferred is pregelatinized starch such as that obtained from waxy maize.

Various types of starch are available commercially from National Starch & Chemical Ltd, Prestbury Court, Greencourts Business Park, 333 Styal Road, Manchester M22 5LW. Starch will suitably be included in the compositions of the invention in an amount ranging from about 0.1 to about 10% w/w, for example from about 0.5 to about 5% w/w of the composition, even more preferably from about 0.3 % to about 3 % w/w of the composition.

Suitable thickening agents for use in the invention include gums such as xanthan gum, corn sugar gum, guar gum, gum acacia, gum tragacanth, locust bean gum, gellan gum and carageenan; cellulose derivatives such as carboxymethylcelluloses, hydroxypropylcelluloses, ethylcelluloses e.g. hydroxyethylcelluloses; alginic acid and salts thereof such as sodium alginate, and mixtures thereof. Carboxymethylcelluloses, and in particular carboxymethylcellulose sodium, is a preferred cellulose derivative.

A hydrocolloid base consisting of starch and xanthan gum is preferred. Xanthan gum is a polymer with five sugar residues, two glucose units, two mannose units and one glucuronic acid and is available in a variety of particle sizes, including 80-mesh and 200-mesh. It is available from many commercial sources including Kelco, a division of the Merck Company (California). A preferred commercial product is Keltrol F from Kelco.

Advantageously the hydrocolloid base may consist of starch and two or more thickening agents such as combinations of the agents referred to above. In particular compositions comprising a hydrocolloid base consisting of starch and xanthan gum, as a first thickening agent, and a second agent selected from guar gum, carragenan, cellulose derivatives such as carboxymethylcelluloses, hydroxypropylcelluloses, ethylcelluloses eg. hydroxyethylcelluloses; alginic acid and salts thereof such as sodium alginate, and mixtures thereof, are preferred.

Carboxymethylcelluloses, and in particular carboxymethylcellulose sodium, is a preferred cellulose derivative.

Thickening agents will suitably be present in compositions of the invention in an amount sufficient to impart the desired thickness to the compositions; thus the amount of a particular thickening agent required will be determined by the thickening agent to be used. Suitably each thickening agent or the total amount of thickening agents present will be in the range from about 0.1 to about 5 % w/w, preferably from about 0.1% to about 3%w/w of the composition. Preferably compositions of the inventions will comprise a total amount of thickening agent in the range from about 0.7 % to about 3 % w/w, with each individual thickening agent being present in an amount from about 0.1 %w/w.

Advantageously inclusion of the hydrocolloid base in compositions of the invention obviates the need for a separate texturizing or stabilizing system. By varying the amount of hydrocolloid base present in the composition, a desired thickness or viscosity may be obtained. The addition of any further viscosity modifying agents is entirely optional. The viscosity of the compositions will generally be in the range 5000 to 15000 cps, preferably 6000 to 10000cps, as determined at room temperature and at a shear rate of 10rpm using a Brookfield Viscometer with a disc spindle, spindle 5. Advantageously such compositions are robust and show good physical stability, with minimal separation of the oil and aqueous phases and good pourability i.e. compositions in the form of emulsions, stored in bottles have been shown to pour readily from the bottles, even after storage for a period of months. In addition, minimal changes to colour and odour are also observed.

A sweetening agent is present in compositions of the invention in order to impart a sweet taste to the compositions and may be selected from solid natural and synthetic sweeteners. Non-limiting examples include nutritive sugars such carbohydrates e.g. sucrose (cane sugar), glucose and fructose, maltodextrins and mixtures thereof. Non-nutritive sugars include aspartame and saccharin. The sweeteners may be used in amounts necessary to impart sweetness. Suitably, such amounts include from about 0.01 to about 10% w/w, preferably from about 0.5 to about 6% w/w of the composition.

Compositions of the present invention may comprise an agent that further modifies the taste and/or odour of the compositions, above that already achieved with the hydrocolloid base. Such agents include alkali earth metal salts or amino acids. Illustrative non-limiting examples of such salts include sodium salts for example selected from the group consisting of sodium citrate, sodium carbonate and sodium tripolyphosphate. Suitably the salts may comprise about 0.005 to about 1 %, preferably from about 0.05 to about 0.2%w/w of the composition. Illustrative non-limiting examples of amino acids include amino acids selected from the group consisting of leucine, lysine and aspartic acid. L-lysine, a preferred amino acid, has been shown surprisingly to improve palatability. Suitably the amino acids are present in an amount ranging from about 0.01 to about 1 % w/w, preferably from about 0.1 to about 0.5 % w/w of the composition.

Suitably the water component or aqueous phase of the compositions of the invention has a low pH, i.e. less than or equal to 7, preferably from about 3 to about 7, more preferably from about 3 to about 5. A low pH is essential when the compositions comprise a further taste or odour modifier which is in the form of an amino acid as described herein. A low pH may be achieved by the use of a pH modifying agent such as an acid or a suitable buffer such as a salt of an acid that is physiologically acceptable and that does not have an objectionable taste. Suitable pH modifying agents include acids such as citric, malic, phosphoric, fumaric, lactic, tartaric, glycolic, mandelic, or acetic and salts thereof.

Compositions of the invention may further comprise accessory food factors such as minerals, trace elements and vitamins. Suitably the compositions comprise a nutritionally supplemental amount, i.e. a nourishing amount, of the food factors. This is supplemental or in addition to the amount found in the average diet and will provide from about 10% to about 200% of the Recommended Dietary Allowance (RDA).

Non-limiting examples of mineral elements and trace elements suitable for use in the invention include sodium, potassium, calcium, phosphorous, magnesium, manganese, copper, zinc, iron, selenium, chromium, and molybdenum in pharmaceutically acceptable form. Suitably salt forms of the above may be used. Advantageously the food factors falling within the scope of the invention do not adversely affect the palatability and organoleptic properties of the compositions. For example suitable sources of calcium include calcium phosphate such as tricalcium phosphate and monocalcium phosphate, calcium carbonate and mixtures thereof. Mixtures of tricalcium phosphate and monocalciumphosphate are preferred. Suitably the trace elements and minerals are present in an amount ranging from about 0.5 % to about 5% w/w, preferably from about 0.8% to about 2.5 % w/w of the composition.

Non-limiting examples of vitamins suitable for incorporation in the composition include vitamin A and provitamins thereof, vitamin D, vitamin K, vitamin C, folic acid, thiamine, riboflavin, vitamin B1, vitamin B6, vitamin B12, niacin, biotin, and panthotenic acid in pharmaceutically suitable form. Vitamins will be included in the compositions so as to give the desired amount, in line with the RDA; for example vitamin A palmitate, at a concentration of 1.7MIU/g may typically be present in an amount not greater than 0.01 %w/w of the composition, whilst Vitamin D3 at a concentration of 1.0MIU/g will be present in an amount not exceeding 0.001 %w/w of the composition.

A problem associated with edible oil-containing compositions is that they are susceptible to fungal contamination, e.g. contamination with yeasts and/or moulds. Accordingly compositions of the invention aim to overcome this problem and may comprise a preservative or preservative mixture. Preservatives suitable for use in the invention include sorbic acid or a salt thereof, a paraben and benzoic acid or a salt thereof. Suitably the sorbic acid component is in the form of an alkali metal salt such as potassium sorbate and the paraben is an alkyl paraben, such as methylparaben e.g. sodium methyl hydroxybenzoate or propyl paraben e.g. sodium propyl hydroxybenzoate or an ionic paraben preferably sodium paraben. Suitably the preservative content of the compositions may range from about 0.001 to about 5 % w/w of the composition.

Suitably compositions of the present invention contain additives or excipients conventional in the field of nutrition and pharmaceutical compositions, including for example antioxidants, opacifiers, colorants and flavourings. The additives or excipients used in any given composition will be compatible both with each other and with the essential ingredients of the composition such that there is no interaction that would impair the performance of the compositions. All additives or excipients must of course be non-toxic and of sufficient purity to render them suitable for human use.

Antioxidants used in compositions of the invention are oil-soluble antioxidants and include for example alpha tocopherol or ascorbyl palmitate, suitably in an amount ranging from 0.5% to around 1% w/w of the composition.

Suitable opacifiers include alginates e.g. propylene glycol alginate and sodium alginate. An opacifier may be used in an amount ranging from 0.005% to around 0.5 % w/w of the composition. When used as an opacifier, sodium alginate or propylene glycol alginate will suitably be present in an amount ranging from about 0.005% to about 0.20% w/w.

Preferred flavourings for the compositions are the natural and artificial flavourings such as lemon, lime, orange, peach pineapple, raspberry and the like. Suitably, flavourings may be used in an amount ranging from about 0.005% to about 2.00% w/w of the composition, preferably in an amount less than 1 % w/w.

In a further aspect of the invention there is provided a palatable composition as hereinbefore described for use in therapy.

The present invention extends to a process for preparing a composition as hereinbefore defined. Generally the hydrocolloid base and the sweetening agent, together with any water-soluble additives, are dissolved in water to form an aqueous phase and the pH is checked and adjusted if required. An oil phase is prepared containing oil-soluble or oil-miscible additives, if any, and the unpalatable edible oil, which is then admixed with the aqueous phase. If required, the mixture is heated in order to obtain a homogenous mix of the two phases. Alternatively the hydrocolloid base may be added directly to the oil phase, which is then combined with the aqueous phase as described above. The final mix may then be mixed at high shear in order to ensure adequate dispersion of the oily and aqueous phases. The invention will now be described with reference to the following non-limiting Examples.

### Example 1 - Blackcurrant Seed Oil Composition

| Ingredient | % w/w |
|---|---|
| Blackcurrant seed oil | 10.00 |
| Xanthan Gum | 0.85 |
| Potassium Sorbate | 0.10 |
| Parabens | 0.10 |
| Propylene Glycol Alginate | 0.13 |
| Sucrose | 0.63 |
| Pregelatinized Maize Starch | 0.80 |
| TriCalcium Phosphate | 0.78 |
| MonoCalcium Phosphate | 0.04 |
| L-Lysine | 0.10 |
| Deionised Water | Up to 100 |
| TOTALS | 100.00 |

### Example 2 -Blackcurrant Seed Oil Composition

| Ingredient | % w/w |
|---|---|
| Blackcurrant seed Oil | 5.00 |
| Xanthan Gum | 0.59 |
| Potassium Sorbate | 0.10 |
| Parabens | 0.01 |
| Propylene Glycol Alginate | 0.13 |
| Sucrose | 5.63 |
| Pregelatinized Maize Starch | 1.0 |
| TriCalcium Phosphate | 1.78 |
| MonoCalcium Phosphate | 1.04 |
| L-Lysine | 0.10 |
| Deionised Water | Up to 100 |
| TOTALS | 100.00 |

### Example 3- Preparation of Blackcurrant Seed Oil Compositions of Examples 1 and 2

An aqueous phase and an oil phase is prepared. The water-soluble ingredients of the composition are dissolved in the aqueous phase, whilst the oil-soluble ingredients are dissolved in the oil phase. If desired, a premix of ingredients may be prepared and added to the oil or aqueous phases prior to forming the final mix. For example a dry blend of the dry ingredients may be prepared and dispersed in water e.g. using a Silverson mixer, typically operating at 8000rpm for 2 minutes, prior combining aqueous and oil phases. The final mix, consisting of all the components of the composition, is mixed at room temperature, at high shear rates sufficient to form the emulsion product e.g. using a Silverson mixer, typically operating at 8000rpm for 2 minutes.

### Example 4 - Evening Primrose Oil Composition

| | |
|---|---|
| Ingredient | % w/w |
| Evening primrose oil | 6 |
| Xanthan Gum | 0.5 |
| Potassium Sorbate | 0.1 |
| Parabens | 0.01 |
| Propylene Glycol Alginate | 0.156 |
| Glucose | 4 |
| Fructose | 1.5 |
| Pregelatinized Maize Starch | 0.92 |
| TriCalcium Phosphate | 1.78 |
| MonoCalcium Phosphate | 1.04 |
| Deionised Water | Up to 100 |
| TOTALS | 100 |

### Example 5 - Borage Seed Oil Composition

| | |
|---|---|
| Ingredient | % w/w |
| Borage seed oil | 8 |
| Xanthan Gum | 0.85 |
| Potassium Sorbate | 0.1 |
| Parabens | 0.01 |
| Propylene Glycol Alginate | 0.156 |
| Maltodextrin | 3 |
| Fructose | 2 |
| Pregelatinized Maize Starch | 0.8 |
| TriCalcium Phosphate | 1.78 |
| MonoCalcium Phosphate | 1.04 |
| Deionised Water | Up to |
| | 100 |
| TOTALS | 100 |

### Example 6 - Preparation of Primrose Oil Composition and Borage Seed Oil Composition of Examples 4 and 5

These compositions were prepared as described in Example 3.

## Claims

1. A palatable composition comprising an oil phase, an aqueous phase, a hydrocolloid base and a sweetening agent; wherein the said oil phase contains a plant seed oil from a *Ribes* fruit, evening primrose or borage plant and the hydrocolloid base consists of starch and at least one thickening agent is selected from the group consisting of xanthan gum, guar gum, carageenan, cellulose derivatives, alginic acid and salts thereof.

2. A palatable composition according to claim 1 wherein the *Ribes* fruit is *Ribes* nigrum, *Ribes* rubrum or *Ribes* ovacrispa.

3. A palatable composition according to claim 1 or claim 2 in the form of an oil-in-water emulsion comprising 0.1% to 30% w/w of the plant seed oil as the oil phase and 75% to 95% w/w of the aqueous phase.

4. A palatable composition according to any one of claims 1 to 3 comprising 0.5% to 5% w/w of starch.

5. A palatable composition according to any one of claims 1 to 4 comprising 0.5% to 6%w/w of sweetening agent.

6. A palatable composition according to any one of claims 1 to 5 wherein the thickening agent is xanthan gum.

7. A palatable composition according to any one of claims 1 to 5 comprising a hydrocolloid base consisting essentially of starch and two thickening agents.

8. A palatable composition according to claim 7 wherein a first thickening agent is xanthan gum.

9. A palatable composition according to claim 7 or claim 8 wherein a second thickening agent is selected from the group consisting of guar gum, carageenan, cellulose derivatives and alginic acid and salts thereof

10. A palatable composition according to claim 1 comprising an oil phase, an aqueous phase, a hydrocolloid base and a sweetening agent; wherein the said oil phase contains a plant seed oil from a *Ribes* fruit, evening primrose or borage plant, the hydrocolloid base consists of two or more thickening agents.

11. A palatable composition according to claim 10 wherein the hydrocolloid base consists essentially of xanthan gum as a first thickening agent and a second thickening agent selected from guar gum, carageenan, cellulose derivatives, alginic acid and salts thereof.

12. A palatable composition according to claim 11 wherein the cellulose derivatives comprise carboxymethyl cellulose.

13. A composition according to any one of claims 10 to 12 in the form of an oil-in-water emulsion comprising 0.1% to 30% w/w of the plant seed oil as the oil phase and 75% to 95% w/w of the aqueous phase.

14. A palatable composition according to any one of claims 10 to 13 comprising 0.5% to 5% w/w of starch.

15. A composition according to any one of claims 10 to 14 comprising 0.5% to 6% w/w of sweetening agent.

16. A composition according to any one of claims 1 to 15 having a viscosity of 6000 to 10000cps.

17. A composition according to any of claims 1 to 16 further comprising trace elements, minerals and/or vitamins.

18. A composition according to any of claims 1 to 17 further comprising a preservative.

19. A composition according to any one of claims 1 to 18 further comprising a taste modifier that is an alkali earth metal salt.

20. A composition according to any one of claims 1 to 19 wherein the pH of the aqueous phase is equal to or less than 7.

21. A composition according to claim 20 wherein the pH is 3 to 5.

22. A composition according to any one of claims 20 to 21 wherein the taste modifier is an amino acid.

23. A composition according to claim 22 wherein the amino acid is selected from the group consisting of leucine, lysine and aspartic acid.

24. A method of preparing a palatable composition according to any one of claims 1 to 23 comprising the steps of:
A. dissolving a sweetening agent and any other water soluble-ingredient(s) in water forming an aqueous phase;
B. adjusting the pH if required;
C. dissolving a hydrocolloid base in a plant seed oil to form an oil phase;
D. admixing the aqueous phase with the oil phase.

## Patentansprüche

1. Eine schmackhafte Zusammensetzung, die eine Ölphase, eine wässrige Phase, eine Hydrokolloid-Grundlage und ein Süßungsmittel umfasst, wobei die Ölphase ein Pflanzensamenöl einer Ribes-Frucht, Nachtkerze oder Borretsch-Pflanze enthält und die Hydrokolloid-Grundlage aus Stärke und mindestens einem Verdickungsmittel besteht, ausgewählt aus der Gruppe bestehend aus Xanthangummi, Guargummi, Carageenan, Zellulosederivaten, Alginsäure und Salzen davon.

2. Schmackhafte Zusammensetzung gemäß Anspruch 1, wobei die Ribes-Frucht schwarze Johannisbeere (Ribes nigrum), rote Johannisbeere (Ribes rubrum) oder Stachelbeere (Ribes ovacrispa) ist.

3. Schmackhafte Zusammensetzung gemäß Anspruch 1 oder Anspruch 2 in Form einer Öl-in-Wasser-Emulsion, umfassend 0,1% bis 30 Gew.-% des Pflanzensamenöls als Ölphase und 75% bis 95 Gew.-% der wässrigen Phase.

4. Schmackhafte Zusammensetzung gemäß irgendeinem der Ansprüche 1-3, umfassend 0,5% bis 5 Gew.-% Stärke.

5. Schmackhafte Zusammensetzung gemäß irgendeinem der Ansprüche 1-4, umfassend 0,5% bis 6 Gew.-% eines Süßungsmittels.

6. Schmackhafte Zusammensetzung gemäß irgendeinem der Ansprüche 1-5, wobei das Verdickungsmittel Xanthangummi ist.

7. Schmackhafte Zusammensetzung gemäß irgendeinem der Ansprüche 1-5, umfassend eine Hydrokolloid-Grundlage, die im Wesentlichen aus Stärke und zwei Verdickungsmitteln besteht.

8. Schmackhafte Zusammensetzung gemäß Anspruch 7, wobei das erste Verdickungsmittel Xanthangummi ist.

9. Schmackhafte Zusammensetzung gemäß Anspruch 7 oder Anspruch 8, wobei ein zweites Verdickungsmittel ausgewählt ist aus der Gruppe, die aus Guargummi, Carageenan, Zellulosederivaten und Alginsäure und Salzen davon besteht.

10. Schmackhafte Zusammensetzung gemäß Anspruch 1, umfassend eine Ölphase, eine wässrige Phase, eine Hydrokolloid-Grundlage und ein Süßungsmittel, wobei die Ölphase ein Pflanzensamenöl einer Ribes-Frucht, Nachtkerze oder Borretsch-Pflanze enthält, die Hydrokolloid-Grundlage aus zwei oder mehr Verdickungsmitteln besteht.

11. Schmackhafte Zusammensetzung gemäß Anspruch 10, wobei die Hydrokolloid-Grundlage im wesentlichen aus Xanthan als erstem Verdickungsmittel und einem zweiten Verdickungsmittel besteht, das ausgewählt wird aus Guargummi, Carageenan, Zellulosederivaten, Alginsäure und Salzen davon.

12. Schmackhafte Zusammensetzung gemäß Anspruch 11, wobei die Zellulosederivate Carboxymethylzellulose umfassen.

13. Zusammensetzung gemäß irgendeinem der Ansprüche 10-12 in Form einer Öl-in-Wasser-Emulsion, umfassend 0,1% bis 30 Gew.-% des Pflanzensamenöls als Ölphase und 75% bis 95 Gew.-% der wässrigen Phase.

14. Schmackhafte Zusammensetzung gemäß irgendeinem der Ansprüche 10-13, umfassend 0,5% bis 5 Gew.-% Stärke.

15. Zusammensetzung gemäß irgendeinem der Ansprüche 10-14, umfassend 0,5% bis 6 Gew.-% Süßungsmittel.

16. Zusammensetzung gemäß irgendeinem der Ansprüche 1-15 mit einer Viskosität von 6000 bis 10000 cps.

17. Zusammensetzung gemäß irgendeinem der Ansprüche 1-16, weiter umfassend Spurenelemente, Mineralien und/oder Vitamine.

18. Zusammensetzung gemäß irgendeinem der Ansprüche 1-17, weiter umfassend ein Konservierungsmittel.

19. Zusammensetzung gemäß irgendeinem der Ansprüche 1-18, weiter umfassend einen Geschmacksmodifizierer, welcher ein Alkalierdmetallsalz ist.

20. Zusammensetzung gemäß irgendeinem der Ansprüche 1-19, wobei der pH der wässrigen Phase gleich oder weniger als 7 ist.

21. Zusammensetzung gemäß Anspruch 20, wobei der pH 3 bis 5 ist.

22. Zusammensetzung gemäß irgendeinem der Ansprüche 20-21, wobei der Geschmacksmodifzierer eine Aminosäure ist.

23. Zusammensetzung gemäß Anspruch 22, wobei die Aminosäure ausgewählt ist aus der Gruppe bestehend aus Leucin, Lysin und Aspargensäure.

24. Verfahren zum Herstellen einer schmackhaften Zusammensetzung gemäß irgendeinem der Ansprüche 1-23, umfassend die Schritte
A. Lösen eines Süßungsmittel und irgendeinem anderen wasserlöslichen Inhaltsstoff in Wasser, **dadurch** Bilden einer wässrigen Phase;
B. Einstellen des pH-Werts, falls nötig;
C. Lösen einer Hydrokolloid-Grundlage in einem Pflanzensamenöl, um eine Ölphase zu bilden;
D. Mischen der wässrigen Phase mit der Ölphase.

## Revendications

1. Composition appétente comprenant une phase huileuse, une phase aqueuse, une base hydrocolloïdale et un agent édulcorant ; dans laquelle ladite phase huileuse contient une huile de graine végétale provenant d'un fruit de *Ribes,* d'onagre, ou de bourrache, et la base hydrocolloïdale est constituée d'amidon et d'au moins un agent épaississant choisi dans le groupe constitué par la gomme xanthane, la gomme de guar, la carraghénane, les dérivés de cellulose, l'acide alginique et ses sels.

2. Composition appétente selon la revendication 1, dans laquelle le fruit de *Ribes* est *Ribes* nigrum, *Ribes* rubrum ou *Ribes* ovacrispa.

3. Composition appétente selon la revendication 1 ou la revendication 2, sous la forme d'une émulsion huile dans l'eau comprenant 0,1 % à 30 % p/p de l'huile de graine végétale en tant que phase huileuse et 75 à 95 % p/p de la phase aqueuse.

4. Composition appétente selon l'une quelconque des revendications 1 à 3, comprenant 0,5 % à 5 % p/p d'amidon.

5. Composition appétente selon l'une quelconque des revendications 1 à 4, comprenant 0,5 % à 6 % p/p d'agent édulcorant.

6. Composition appétente selon l'une quelconque des revendications 1 à 5, dans laquelle l'agent épaississant est la gomme xanthane.

7. Composition appétente selon l'une quelconque des revendications 1 à 5, comprenant une base hydrocolloïdale constituée essentiellement d'amidon et de deux agents épaississants.

8. Composition appétente selon la revendication 7, dans laquelle un premier agent épaississant est la gomme xanthane.

9. Composition appétente selon la revendication 7 ou la revendication 8, dans laquelle un deuxième agent épaississant est choisi dans le groupe constitué par la gomme de guar, la carraghénane, les dérivés de cellulose et l'acide alginique et ses sels.

10. Composition appétente selon la revendication 1, comprenant une phase huileuse, une phase aqueuse, une base hydrocolloïdale et un agent édulcorant ; dans laquelle ladite phase huileuse contient une huile de graine végétale provenant d'un fruit de *Ribes*, d'onagre, ou de bourrache, et la base hydrocolloïdale est constituée de deux agents épaississants ou plus.

11. Composition appétente selon la revendication 10, dans laquelle la base hydrocolloïdale est constituée essentiellement de gomme xanthane en tant que premier agent épaississant et d'un deuxième agent épaississant choisi parmi la gomme de guar, la carraghénane, les dérivés de cellulose, l'acide alginique et ses sels.

12. Composition appétente selon la revendication 11, dans laquelle les dérivés de cellulose comprennent de la carboxyméthylcellulose.

13. Composition selon l'une quelconque des revendications 10 à 12, sous la forme d'une émulsion huile dans l'eau comprenant 0,1 % à 30 % p/p d'une huile de graine végétale en tant que phase huileuse et 75 % à 95 % p/p de la phase aqueuse.

14. Composition appétente selon l'une quelconque des revendications 10 à 13, comprenant 0,5 % à 5 % p/p d'amidon.

15. Composition selon l'une quelconque des revendications 10 à 14, comprenant 0,5 % à 6 % p/p d'agent édulcorant.

16. Composition selon l'une quelconque des revendications 1 à 15, ayant une viscosité de 6 000 à 10 000 cps.

17. Composition selon l'une quelconque des revendications 1 à 16, comprenant en outre des oligo-éléments, des minéraux et/ou des vitamines.

18. Composition selon l'une quelconque des revendications 1 à 17, comprenant en outre un conservateur.

19. Composition selon l'une quelconque des revendications 1 à 18, comprenant en outre un modificateur de goût qui est un sel de métal alcalino-terreux.

20. Composition selon l'une quelconque des revendications 1 à 19, dans laquelle le pH de la phase aqueuse est égal ou inférieur à 7.

21. Composition selon la revendication 20, dans laquelle le pH est de 3 à 5.

22. Composition selon l'une quelconque des revendications 20 et 21, dans laquelle le modificateur de goût est un acide aminé.

23. Composition selon la revendication 22, dans laquelle l'acide aminé est choisi dans le groupe constitué par la leucine, la lysine et l'acide aspartique.

24. Procédé pour préparer une composition appétente selon l'une quelconque des revendications 1 à 23, comprenant les étapes de :
A. dissolution d'un agent édulcorant et de n'importe quel(s) autre(s) ingrédient(s) soluble(s) dans l'eau formant une phase aqueuse ;
B. ajustement du pH si c'est nécessaire ;
C. dissolution d'une base hydrocolloïdale dans une huile de graine végétale pour former une phase huileuse ;
D. mélange de la phase aqueuse avec la phase huileuse.
